# NEW EUROPEAN PATENT SPECIFICATION

(11) **EP 0 971 147 B2**
(45) Date of publication and mention of the opposition decision: **27.07.2011**
(45) Mention of the grant of the patent: 10.09.2003
(21) Application number: 99500110.4
(22) Date of filing: 30.06.1999
(51) Int. Cl.: F16D 65/12, B62L 1/00

(54) **Improved brake disk**
Verbesserte Bremsscheibe
Disque de frein amélioré

(30) Priority: 06.07.1998 ES 9801778 U
(43) Date of publication of application: 12.01.2000
(73) Proprietor: Industrias Galfer, S.A., 08018 Barcelona (ES)
(72) Inventor: Milesi, Umberto, 08006 Barcelona (ES)
(74) Representative: Maldonado Jordan, Julia

(56) References cited:
- EP-B1- 0 898 664
- EP-B1- 0 985 841
- DE-A1- 1 605 543
- DE-A1- 2 002 437
- DE-A1- 2 516 324
- DE-A1- 2 708 285
- DE-A1- 3 226 716
- DE-A1- 19 641 419
- DE-A1- 19 648 582
- JP-A- 8 093 809
- JP-A- 8 219 201
- US-A- 4 279 333
- US-A- 4 279 333
- PATENT ABSTRACTS OF JAPAN vol. 1996, no. 12, 26 December 1996 (1996-12-26) & JP 08 219201 A (NISSIN KOGYO KK), 27 August 1996 (1996-08-27)
- RAPCO FLEET SUPPORT, INC. FAA-PMA APPROVED REPLACEMENT BRAKE PARTS 465 CARDINAL LANE, HARTLAND, WISCONSIN 53029 USA,
- MOTOCROSS vol. 8, August 1998, LEGGE 662/96-MILANO, ISSN 977039264 pages 128 - 129

## Description

### OBJECT OF THE INVENTION

The invention refers to a brake disc for motorcycles or the like, with a series of constructional features on the peripheral part forming the brake band.

### BACKGROUND TO THE INVENTION

Motorcycle brake discs generally have an external section which is ring-shaped, flat, and not very thick, on which the brake shoes operate; this external section forms the brake band. Said discs also have an interior form designed to allow them to be fixed on to the wheel. This interior form and the exterior section may be a monobloc unit or may be joined in such as way as to permit expansion of the outer section so that it will not become deformed when it heats.

One of the problems of such discs arises precisely from the heating they experience during braking so that, normally, the exterior part has a number of openings through it to facilitate cooling.

On so-called road motorcycles, the discs reach very high temperatures because of the speeds involved, so that the openings in the brake discs are important in facilitating cooling. Should water get into these openings, it evaporates virtually instantly thanks to the high temperature of the disc.

However, on cross and trial motorcycles, these openings have advantages in terms of reduced weight, but they do have significant drawbacks when mud gets into them since it is unable to be released because the disc turns at a much slower speed than on road motorcycles.

### A DESCRIPTION OF THE INVENTION

To overcome these problems, particularly on cross and trial motorcycles, the brake disc which is the subject of this invention has been designed with a number of constructional features on the peripheral section forming the brake band.

In this invention, said peripheral part of the disc does not have inside holes, so that the problem of the accumulation and retention of mud inside them is overcome; said peripheral section also has a series of off-sets on its inside and outside edges of the same thickness as the rest of the section so as to reduce the total weight of the disc, facilitate its cooling and prevent mud from being retained inside.

Said off-sets on the inside and outside edges of the peripheral section of the disc are arranged alternately so that the width of said section is substantially constant. As a result, during braking the contact surface of the brake band with the shoes hardly alters with the rotation of the disc: otherwise, braking may be intermittent and may vary according to the area of contact between disc and shoes.

To ensure uniform distribution of the disc mass, the inside and outside off-sets are distributed evenly on the periphery, in alternating form.

### A DESCRIPTION OF THE DRAWINGS

To complete this description and aid in a better understanding of the features of the invention, these Specifications are accompanied by a set of drawings, forming an integral part hereof and where, by way of illustration and without limitation, the following is shown:

Figure 1 is an elevated view of a variant of the design for the brake disc which is the subject of the invention, with the running band of sinusoidal form: this figure also shows the outline of one of the brake shoes, with a broken line.

Figure 2 shows a design variant partially showing the peripheral section of the disc, in this case with substantially trapezoid-shaped off-sets.

### A PREFERRED EMBODIMENT OF THE INVENTION

As can be seen from the aforementioned figures, the brake disc which is the subject of the invention comprises the usual peripheral section (1) forming the brake band, with an internal form (2) to enable it to be attached to its wheel.

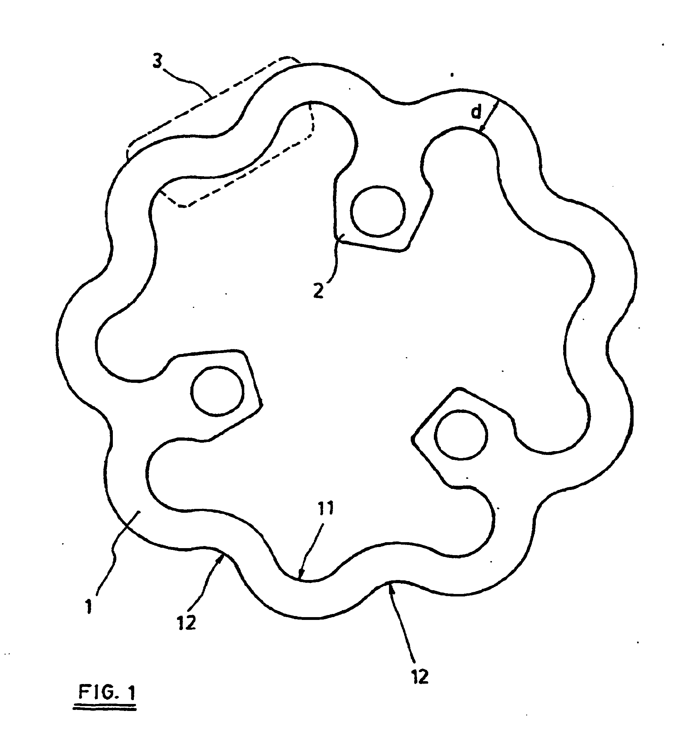

As shown in figure 1, said peripheral portion (1) is a single solid block, with off-sets (11 and 12) on its inside and outside edges, distributed along those edges, and displaced at an angle to each other, so that the inside off-sets (11) are in the area between two consecutive outside off-sets (12): as a result, said peripheral section (1) is substantially the same width (d) throughout its length.

This constant width of the section (1) ensures that, during braking, the contact area between said section (1) and the brake shoes (3) is constant: otherwise, braking might be intermittent, precisely because of the variations in the area of contact between the two elements.

The arrangement of the inside off-sets (11) and their outside counterparts (12) not just helps to cool the disc, but also prevents mud or other elements which might negatively affect braking from accumulating on it.

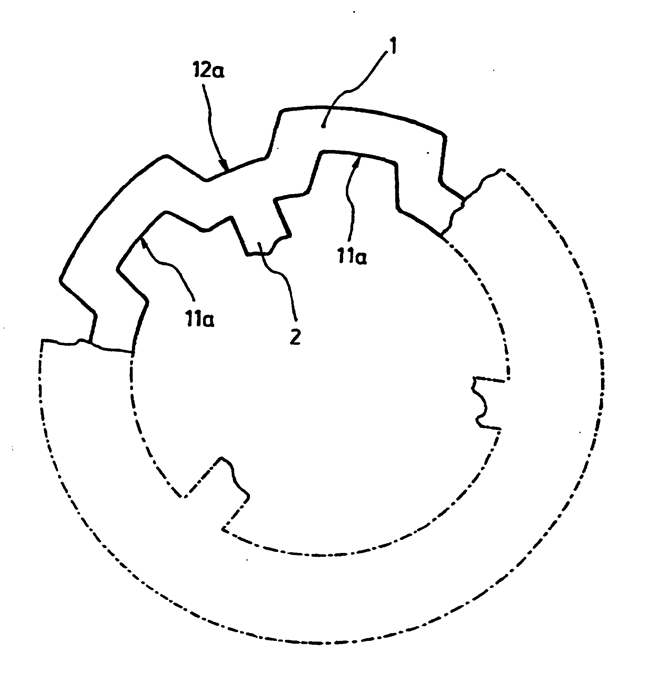

As the figures show, the inside and outside off-sets (11 and 12)may be rounded, with section (1) taking on a sinusoidal form as in figure 1: or they may have different shapes as in the design variant in figure 2 where the off-sets (11a and 12a) are substantially trapezoid-shaped.

It is not considered necessary to extend this description in order for any expert in the field to understand the scope of the invention and the advantages arising from it.

The terms of these Specifications must be taken always in the broad sense, without limitation.

The materials, shape, size and layout of the elements may be changed provided that this does not involve an alteration to the essential characteristics of the invention, claimed below.

## Claims

1. A brake disc of the type formed by a peripheral section (1) making up a brake band, with an interior form (2) to enable it to be fitted to its wheel, wherein the brake band forms two lateral, flat, parallel surfaces on which the brake shoes (3) can act, said peripheral section (1) of the disc, forming the brake band, having a series of off-sets (11 and 12) on its inside and outside edges, of the same thickness as the rest of said section, intended to reduce the total weight of the disc, facilitate its cooling and prevent the disc from accumulating mud or other elements, **characterized in that** the width of said peripheral section (1) is substantially constant.

2. A brake disc according to claim 1 wherein said peripheral section (1) forming the brake band is solid, without inside openings.

3. A brake disc according to claim 1 wherein the off-sets (11 and 12) on the inside and outside edges of the peripheral section (1) are arranged alternately.

4. A brake disc according to claim 1 wherein the inside and outside off-sets (11 and 12) are distributed evenly on the peripheral section (1) of the disc.

## Patentansprüche

1. Eine Bremsscheibe des Typs, gebildet von einem Peripherieabschnitt (1), der ein Bremsband bildet, mit einer Innenform (2), um dessen Montage an seinem Rad zu ermöglichen, in dem das Bremsband zwei seitliche, flache, parallele Flächen bildet, auf das die Bremsbacken (3) wirken können, wobei der besagte Peripherieabschnitt (1) der Scheibe, der das Bremsband bildet, auf seinen Innen- und Außenrändern eine Reihe von Versetzungen (11 und 12) der gleichen Dicke wie der Rest der besagten Scheibe besitzt, dazu bestimmt, das Gesamtgewicht der Scheibe zu reduzieren, ihr Abkühlen zu fördern und zu verhindern, dass die Scheibe Schmutz oder andere Elemente ansammelt, **dadurch** charakterisiert, dass die Breite des besagten Peripherieabschnitts (1) substantiell konstant ist.

2. Eine Bremsscheibe gemäß Patentanspruch 1, bei der der besagte Peripherieabschnitt (1), der das Bremsband bildet, massiv ohne Innenöffnungen ist.

3. Eine Bremsscheibe gemäß Patentanspruch 1, bei der die Versetzungen (11 und 12) auf den Innen- und Außenrändern des Peripherieabschnitts (1) alternierend angeordnet sind.

4. Eine Bremsscheibe gemäß Patentanspruch 1, bei der Innen- und Außenversetzungen (11 und 12) gleichmäßig auf den Peripherieabschnitt (1) der Scheibe verteilt sind.

## Revendications

1. Un disque de frein du type constitué par une section périphérique (1) formant une bande de frein, avec une forme intérieure (2) lui permettant d'être installé sur une roue, dans lequel la bande de frein forme deux surfaces latérales, plates et parallèles sur lesquelles les sabots de frein (3) peuvent agir, ladite section périphérique (1) du disque formant la bande de frein possédant une série d'enfoncements (11 et 12) sur ses bords intérieur et extérieur, de même épaisseur que le reste de ladite section, destinés à réduire le poids total du disque, à en faciliter le refroidissement et à empêcher le disque d'accumuler de la boue ou d'autres éléments, **caractérisé en ce que** la largeur de ladite section périphérique (1) est substantiellement constante.

2. Un disque de frein selon la revendication 1 dans lequel ladite section périphérique (1) constituant la bande de frein est solide, sans ouvertures intérieures.

3. Un disque de frein selon la revendication 1 dans lequel les enfoncements (11 et 12) sur les bords intérieur et extérieur de la section périphérique (1) sont disposés en alternance.

4. Un disque de frein selon la revendication 1 dans lequel les enfoncements intérieur et extérieur (11 et 12) sont répartis uniformément sur la section périphérique (1) du disque.
